# EUROPEAN PATENT APPLICATION

(11) **EP 1 793 441 A2**
(43) Date of publication of application: **06.06.2007**
(21) Application number: 06025039.6
(22) Date of filing: 04.12.2006
(51) Int. Cl.: H01M 8/04, H01M 8/06

(54) **Fuel cell system including a heat exchanger for preheating fuel and/or air using off-gas of the reformer burner**

(30) Priority: 05.12.2005 KR 20050117696
(71) Applicant: LG Electronics Inc., Seoul 150-721 (KR); LG Chem, Ltd., Youngdungpo-gu, Seoul 150-721 (KR)
(72) Inventor: Kim, Ki-Dong, Gimpo Gyeonggi-Do (KR); Ryoo, Sung-Nam, Seo-Gu Daejon (KR)
(74) Representative: Urner, Peter

(57) **Abstract**

A fuel cell system that includes a heat exchange unit which can control the temperature of the fuel and/or the air supplied to a stack unit. In one example embodiment, a fuel cell system includes a reforming unit for generating hydrogen floating gas, and supplying the hydrogen floating gas through a fuel supplying line. The reforming unit includes a burner. The fuel cell system also includes a stack unit for generating electric energy by an electrochemical reaction between air and the hydrogen floating gas. The fuel cell system also includes a heat exchange unit. The heat exchange unit includes a casing having an airtight interior to which off gas generated in the burner is supplied. A portion of the fuel supplying line is arranged to pass through the interior of the casing.

## Description

### BACKGROUND OF THE INVENTION

### Field of the Invention

The present invention relates to a fuel cell system, and more particularly, to a fuel cell system that includes a heat exchange unit which can control the temperature of the fuel and/or the air supplied to a stack unit.

### Description of the Related Art

Electrical power supplied to buildings is often generated by an electric power station using thermal or hydroelectric power. The electrical power generated by the electric power station is supplied to buildings through power transmission lines. The electrical power is then used to operate any one of a number of devices in a manner that is well known.

While a number of power generation techniques are used, in many cases electrical power is generated by burning oil, coal or other fossil fuels. The resulting thermal energy is then used to drive turbines or similar devices so as to produce electricity.

However, the use of fossil fuels to generate electrical power presents a number of drawbacks. For example, the use fossil fuel-based power generation stations are often located long distances from the users of the electrical power. The use of electrical transmission lines to transport the electrical power results in the loss of electricity due to line resistance, and the losses can be especially pronounced over long transmission distances. Furthermore, the burning of oil or coal can result in the production of harmful environmental pollutants.

In order to address the foregoing problems, a number of alternative electrical power generation techniques have been proposed. One alternative utilizes fuel cells to produce electricity. Fuel cells are comparatively efficient at generating electricity, and can do so without producing the harmful environmental pollutants that result from the burning of fossil fuels such as oil or coal and the like.

In a typical implementation, a fuel cell electrochemically reacts a hydrogen-rich fuel and oxygen-rich air. The fuel cell then converts a portion of the energy difference between the pre-reaction and post-reaction chemicals into electrical energy.

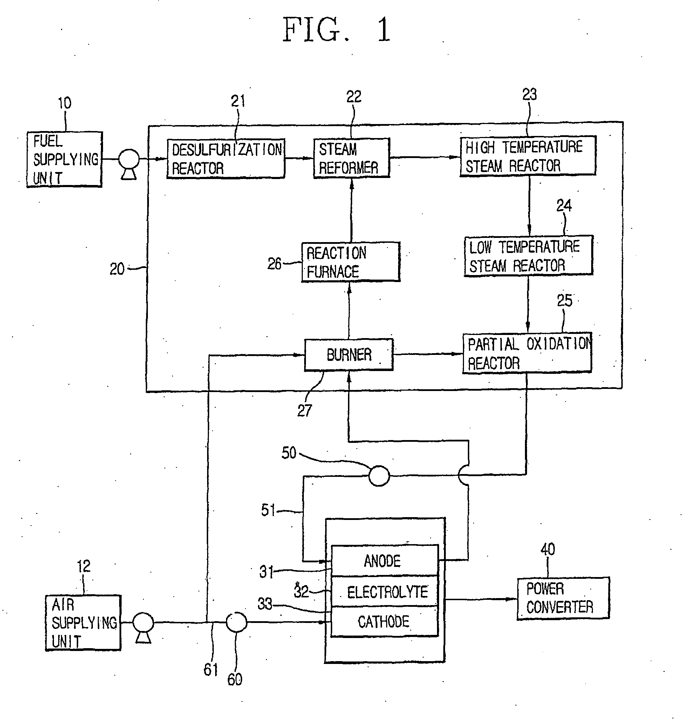

Figure 1 illustrates one example of a conventional fuel cell system. The example fuel cell system is shown as including a fuel supplying unit 10, an air (or similar oxygen-rich substance0 supplying unit 12, a reforming unit 20, a stack unit 30, a power converter 40, a gas-liquid separator 50, and a humidifier 60. In general, the fuel supplying unit 10 supplies fuel to the reforming unit 20. The reforming unit 20 uses the fuel to generate hydrogen floating gas which contains hydrogen gas, reaction heat, and water. The stack unit uses a hydrogen gas component of the hydrogen floating gas and oxygen from the air supplied by the air supplying unit 12 to generate DC current. The power converter 40 converts the DC current generated in the stack unit 30 into AC current.

While other configurations could be used, the example reforming unit 20 of the fuel cell system of Figure 1 includes a desulfurization reactor 21, a steam reformation reactor 22, a high temperature water reactor 23, a low temperature water reactor 24, a partial oxidation reactor 25, a reaction furnace 26, and a burner 27. In general, the desulfurization reactor 21 receives the fuel from the fuel supplying unit 10, along with water and air, and desulfurizes the fuel. The steam reformation reactor 22 reacts the fuel with steam. The high temperature water reactor 23 reacts carbon monoxide with steam. The low temperature water reactor 24 converts the carbon monoxide into carbon dioxide. The partial oxidation reactor 25 converts the non-oxidized carbon monoxide into carbon dioxide. The reaction furnace 26 generates hydrogen from the fuel by reformation and hydrogen purification. The burner 27 supplies heat to the reaction furnace 26.

The stack unit 30 of the example fuel cell system of Figure 1 can be formed, for example, by laminating one or more unit cells. Each unit cell includes two bipolar plates, an anode 31 and a cathode 33, and a membrane electrode assembly (MEA) 32 disposed between the anode 31 and the cathode 33. A passage for the fuel is formed between the anode 31 and one surface of the MEA 32, and a passage for the air is formed between the cathode 33 and another surface of the MEA 32.

In the example shown, the gas-liquid separator 50 is installed at a middle portion of a fuel supplying line 51. The fuel supplying line 51 supplies the hydrogen floating gas generated by the reforming unit 20 to the gas-liquid separator 50. The gas-liquid separator 50 separates the hydrogen floating gas into hydrogen gas and liquid water by condensation, and supplies only the hydrogen gas to the anode 31 of the stack unit 30.

In the example shown, the humidifier 60 is installed at a middle portion of an air supplying line 61. The air supplying line 61 supplies the air from the air supply unit 12 to the humidifier 60. The humidifier 60 adds moisture to the air and then supplies the air to the cathode 33 of the stack unit 30.

In operation, the fuel supplying unit 10 supplies fuel, such as methanol, liquefied natural gas ("LNG"), gasoline or the like, and water to the reforming unit 20. Steam reformation and partial oxidation then occur in the reforming unit 20, thereby generating hydrogen floating gas. After the stack unit 30 is supplied with the hydrogen gas H₂ component of the hydrogen floating gas, the hydrogen gas H₂ is supplied to the anode 31 (or the oxidation electrode 31), and ionized and oxidized into hydrogen ions H+ and electrons e- by electrochemical oxidation. The ionized hydrogen ions are transferred to the cathode 33 (or the deoxidation electrode 33) through the MEA 32, and the electrons are transferred through the anode 31, thereby generating electricity, heat and water. DC current generated in the stack unit 30 is can then be converted to AC current by the power converter 40.

While the fuel cell system of the sort illustrated in Figure 1 provides an efficient and clean source of electrical energy, operation of the system can present several problems. For example, in the type of fuel cell system disclosed in Figure 1, the hydrogen floating gas supplied from the reforming unit 20 through the fuel supplying line 51 generally has a temperature over 100°C. In order to have a temperature suitable for driving the stack unit 30, the hydrogen floating gas passes through the gas-liquid separator 50 which has a heat exchange function and in which the hydrogen floating gas is condensed creating a condensate. If the condensate is supplied to the anode 31 of the stack unit 30, it can damage the stack unit 30.

In addition, the air supplied to the cathode 33 of the stack unit 30 through the humidifier 60 contains moisture. As the air containing the moisture is transferred through the air supplying line 61, the temperature of the air is lowered. If the condensate is supplied to the cathode 33 of the stack unit 30 as in the above case of the anode 31, the condensate can damage the stack unit 30 and reduce the lifespan of the stack unit 30.

### SUMMARY OF EXAMPLE EMBODIMENTS

Accordingly, embodiments of the present invention are directed to a fuel cell system that includes a heat exchange unit that can control the temperature of fuel and/or the air supplied to a stack unit and thereby minimize any damage that may otherwise result. For example, controlling the temperature of the fuel and/or air supplied to the stack unit can help extend the lifespan of the stack unit by helping to avoid damage to the stack unit caused by condensate being supplied to the stack unit.

In one example embodiment, a fuel cell system utilizing a heat exchanger is disclosed. The fuel cell system includes a fuel supplying unit configured to supply a fuel and an air supplying unit that is configured to supply air (or other oxygen containing substance) through an air supplying line. The fuel cell system further includes a reforming unit that is configured to receive the fuel from the fuel supplying unit, generate hydrogen floating gas, and then supply the hydrogen floating gas through a fuel supplying line. In this embodiment, the fuel cell system also includes a stack unit for generating electric energy by an electrochemical reaction between the air supplied through the air supplying line and the hydrogen floating gas supplied through the fuel supplying line.

In illustrated embodiments, the fuel cell system also includes and a heat exchange unit. The heat exchange unit is configured to provide an airtight interior portion to which off gas - such as might be generated in a burner of the reforming unit - is supplied. The heat exchange unit can include, for example, an off gas suction line for supplying the off gas to the interior portion and an off gas discharge line for discharging the off gas.

In one example embodiment, a portion of the air supplying line is arranged to pass through the interior of the heat exchange unit. In another example embodiment, a portion of the fuel supplying line is arranged to pass through the interior portion of the heat exchange unit. In yet another example embodiment, a portion of both the air supplying line and the fuel supplying line are arranged to pass through the interior portion of the heat exchange unit.

Use of the heat exchange unit in this manner provides the ability to control the temperature of the fuel and/or the air supplied to a stack unit. This can help extend the lifespan of the fuel cell system by helping to avoid damage to the stack unit that might otherwise be caused by condensate being supplied thereto.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic view of a conventional fuel cell system configuration;
Figure 2 is a schematic view of a fuel cell system configuration in accordance with one example embodiment of the present invention;
Figure 3 is a schematic view of a fuel cell system configuration in accordance with another example embodiment of the present invention;
Figure 4 is a schematic view of a fuel cell system configuration in accordance with yet another example embodiment of the present invention;
Figure 5 is a perspective cut-away view of an example heat exchange unit; and
Figure 6 is a perspective cut-away view of another example heat exchange unit.

### DETAILED DESCRIPTION OF EXAMPLE EMBODIMENTS

As noted above, example embodiments of the present invention relate to a fuel cell system that includes a heat exchange unit. In preferred embodiments, the heat exchange unit is incorporated within the fuel cell system in a manner so as to control the temperature of the fuel and/or the air that is supplied to a stack unit. Controlling the temperature of the fuel and/or air supplied to the stack unit can help extend the lifespan of the stack unit by helping to avoid damage that can be caused by condensate being supplied to the stack unit.

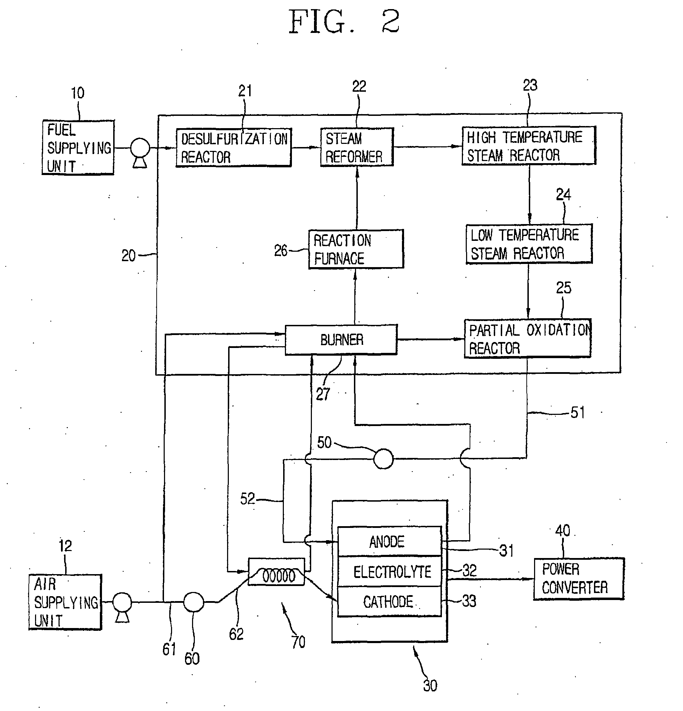

Reference will now be made to some example embodiments of the present invention, relevant details of which are disclosed in Figures 2-6. In Figures 2-6, elements that are identical to those disclosed in Figure 1 have identical reference numerals, and a detailed explanation thereof is omitted.

With particular reference now to Figures 2-4, schematic views of three separate example fuel cell system configurations are disclosed. While other configurations could be used, each of the example fuel cell systems disclosed in Figures 2-4 includes a fuel cell supplying unit 10, an air supplying unit 12, a reforming unit 20, a stack unit 30, a power converter 40, a gas-liquid separator 50, and a humidifier 60, each of which functions substantially as described above in connection with Figure 1. As is disclosed in the example implementations of Figures 2-4, the humidifier 60 is installed between the air supplying unit 12 and the stack unit 30. The air supplying unit 12 and the humidifier 60 are connected through a first air supplying line 61, and the humidifier 60 and the stack unit 30 are connected through a second air supplying line 62. The gas-liquid separator 50 is installed between the reforming unit 20 and the stack unit 30. The reforming unit 20 and the gas-liquid separator 50 are connected through a first fuel supplying line 51, and the gas-liquid separator 50 and the stack unit 30 are connected through a second fuel supplying line 52.

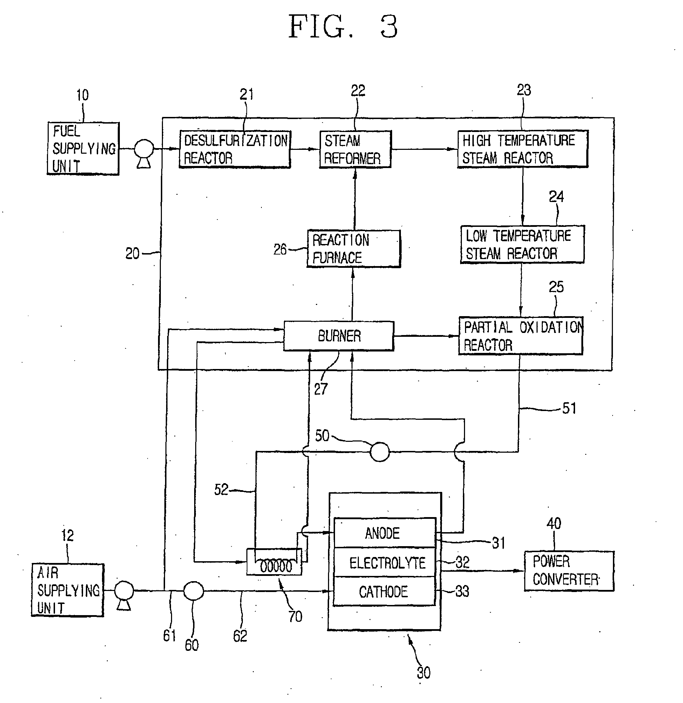

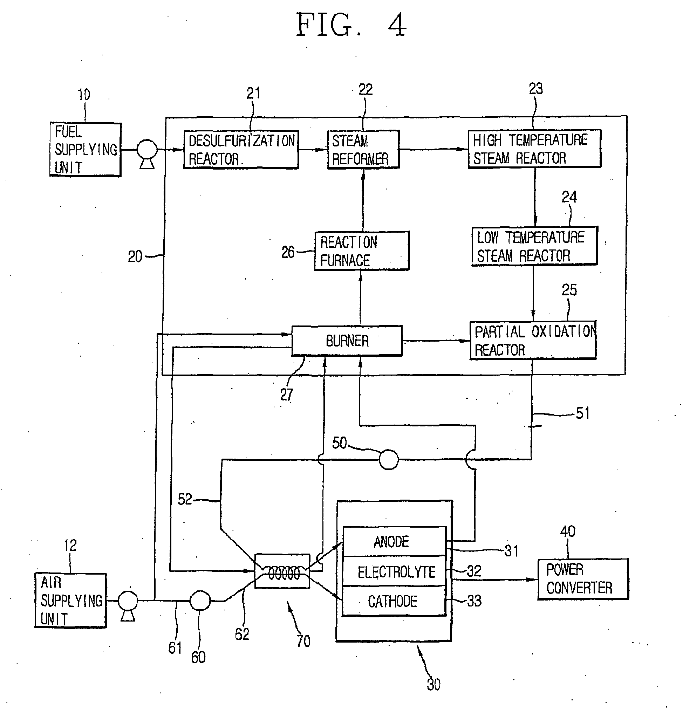

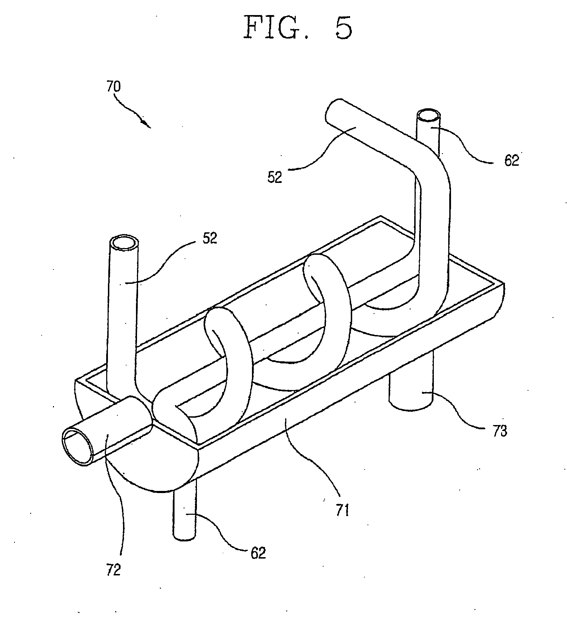

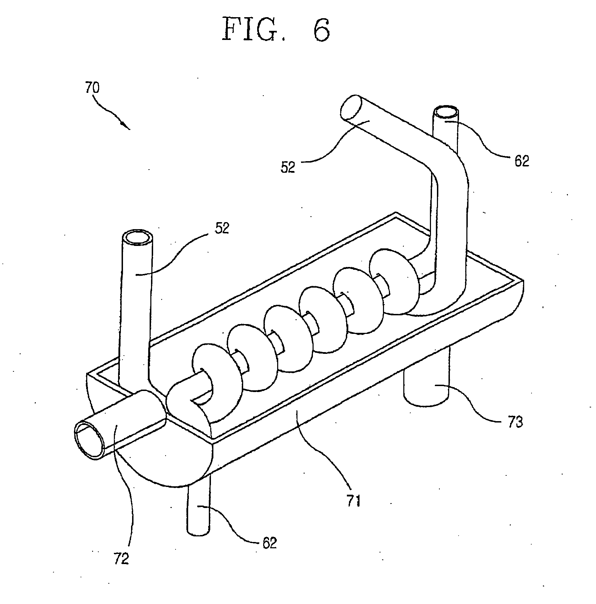

Unlike the fuel cell system disclosed in Figure 1, however, each of the fuel cell systems disclosed in Figures 2-4 includes a heat exchange unit 70, two examples of which are disclosed in Figures 5 and 6. In the example fuel cell configuration of Figure 2, the second air supplying line 62 runs through the heat exchange unit 70. In the example fuel cell configuration of Figure 3, the second fuel supplying line 52 runs through the heat exchange unit 70. In the example fuel cell configuration of Figure 4, both the second fuel supplying line 52 and the second air supplying line 62 run through the heat exchange unit 70.

With continuing reference to Figures 2-4 and with particular reference now also to Figures 5 and 6, additional details of example implementations of a heat exchange unit 70 are disclosed. As disclosed in Figures 5 and 6, the heat exchange unit 70 can include a casing 71, or other similar structure, that is configured so as to provide an airtight interior portion. Off gas discharged from the burner 27 can be supplied to the interior portion through, for example, an off gas suction line 72. Example embodiments of each illustrated heat exchange unit 70 also includes an off gas discharge line 73, or similar structure, that is configured to discharge the off gas from the interior portion of the casing 71.

As disclosed in Figures 5 and 6, a portion of the second air supplying line 62 and a portion of the second fuel supplying line 52 can each be arranged to pass through the interior portion defined by casing 71. In one embodiment, the second air supplying line 62 runs through the interior of the casing 71 in a substantially straight line. The second fuel supplying line 52 also runs through the interior of the casing 71, but instead of running in a substantially straight line, the second fuel supplying line 52 can be implemented so as to substantially surround the periphery of the second air supplying line 62, for example in a generally spiral fashion. As noted above, however, the heat exchange unit 70 need not include both the second fuel supplying line 52 and the second air supplying line 62. Instead, the head exchange unit 70 may include only the second air supplying line 62, as disclosed in Figure 2, or only the second fuel supplying line 52, as disclosed in Figure 3, depending on the objectives and needs of a particular implementation. Also, other configurations and routing schemes could be used than those shown, again, depending on the particular implementation.

The heat exchange unit 70 therefore places a portion of the second air supplying line 62 and/or a portion of the second fuel supplying line 52 in contact with the off gas generated in the burner 27 and supplied to the interior defined by casing 71. Where the temperature of the off gas is higher than the temperature of the air flowing through the second air supplying line 62 but lower than the temperature of the hydrogen gas flowing through the second fuel supplying line 52, this contact with the off gas rapidly increases the relatively low temperature of the air and rapidly decreases the relatively high temperature of the hydrogen gas.

In order to control the temperatures of the fuel and/or the air supplied to the stack unit 30 through the second fuel supplying line 52 and the second air supplying line 62, respectively, the second fuel supplying line 52 and/or the second air supplying line 62 can be disposed in the interior defined by casing 71 in various shapes and configurations.

For example, to lower the temperature of the hydrogen gas supplied to the stack unit 30 through the second fuel supplying line 52, the length of the second fuel supplying line 52 within the interior of casing 71 can be increased by densely arranging the second fuel supplying line 52 within the interior in a substantially spiral shape, as disclosed in Figure 6. In addition, to raise the temperature of the air supplied to the stack unit 30 through the second air supplying line 62, the length of the second air supplying line 62 within the heat exchange unit 70 can be increased by curving the second air supplying line 62 within the casing 71. The hydrogen gas that is supplied to the interior of casing 71 through the second fuel supplying line 52 can thus be cooled to a predetermined temperature, and supplied to the anode 31 of the stack unit 30. At the same time, the air supplied to the casing 71 through the second air supplying line 62 can thus be heated to a predetermined temperature, and supplied to the cathode 33 of the stack unit 30.

In one example embodiment, additional heat exchange between the second fuel supplying line 52 and the second air supplying line 62 is provided by placing the outer surface of the second fuel supplying line 52 and the outer surface of the second air supplying line 62 in contact with each other.

As the stack unit 30 is supplied with the hydrogen gas and air having the predetermined optimum temperatures due to the temperature control performed by the heat exchange unit 70, the hydrogen gas H₂ is supplied to the anode 31, and ionized and oxidized into hydrogen ions H+ and electrons e- by electrochemical oxidation. The ionized hydrogen ions are transferred to the cathode 33 through an electrolyte film 32, and the electrons are transferred through the anode 31, thereby generating electricity, heat and water. Electricity generated in the stack unit 30 can then converted by the power converter 40, depending on the particular electrical power needs.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell system, comprising:
a fuel supplying unit configured to supply a fuel;
an air supplying unit configured to supply air via an air supplying line;
a reforming unit configured to receive the fuel from the fuel supplying unit and generate hydrogen floating gas to a fuel supplying line, the reforming unit including a burner;
a stack unit configured to generate electric energy by an electrochemical reaction between the air supplied from the air supplying unit and the hydrogen floating gas supplied from the reforming unit; and
a heat exchange unit including a substantially airtight interior to which an off gas generated in the burner is supplied, wherein at least a portion of the fuel supplying line is arranged to pass through at least a portion of the interior.

2. The fuel cell system as claimed in claim 1, further comprising:
a humidifier configured to supply moisture to the air supplying line; and
a gas-liquid separator configured to separate gas and liquid is provided at the fuel supplying line.

3. The fuel cell system as claimed in claim 2, wherein the heat exchange unit is disposed at a location on the fuel supplying line so as to be disposed between the gas-liquid separator and the stack unit.

4. A fuel cell system, comprising:
a fuel supplying unit configured to supply a fuel;
an air supplying unit configured to supply air via an air supplying line;
a reforming unit configured to receive the fuel from the fuel supplying unit and to generate hydrogen floating gas, and supplying the hydrogen floating gas through a fuel supplying line, the reforming unit including a burner;
a stack unit configured to generate electric energy by an electrochemical reaction between the air supplied through the air supplying line and the hydrogen floating gas supplied through the fuel supplying line; and
a heat exchange unit including a substantially airtight interior to which an off gas generated in the burner is supplied, wherein at least a portion of the air supplying line is arranged to pass through at least a portion of the interior.

5. The fuel cell system as claimed in claim 4, further comprising:
a humidifier configured to supply moisture to the air supplying line; and
a gas-liquid separator configured to separate gas and liquid is provided at the fuel supplying line.

6. The fuel cell system as claimed in claim 5, wherein the heat exchange unit is disposed at a point on the fuel supplying line so as to be disposed between the humidifier and the stack unit.

7. A fuel cell system, comprising:
a fuel supplying unit configured to supply a fuel;
an air supplying unit configured to supply air via an air supplying line;
a reforming unit configured to receive the fuel from the fuel supplying unit and to generate hydrogen floating gas, and supplying the hydrogen floating gas through a fuel supplying line, the reforming unit including a burner;
a stack unit configured to generate electric energy by an electrochemical reaction between the air supplied through the air supplying line and the hydrogen floating gas supplied through the fuel supplying line; and
a heat exchange unit including a substantially airtight interior to which an off gas generated in the burner is supplied, wherein at least a portion of the fuel supplying line and at least a portion of the air supplying line are configured to pass through at least a portion of the interior.

8. The fuel cell system as claimed in claim 7, further comprising:
a humidifier configured to supply moisture to the air supplying line; and
a gas-liquid separator configured to separate gas and liquid is provided at the fuel supplying line.

9. The fuel cell system as claimed in claim 8, wherein the heat exchange unit is disposed at a point on the fuel supplying line so as to be disposed between the humidifier and the stack unit and at a point on the air supplying line so as to be disposed between the gas-liquid separator and the stack unit.

10. The fuel cell system as claimed in claim 7, wherein at least a portion of the air supplying line passes through the interior so as to be oriented in a substantially straight line, and at least a portion of the fuel supplying line passes through the interior so as to be oriented around a periphery of the air supplying line in a substantially spiral shape.

11. The fuel cell system as claimed in claim 10, wherein at least a portion of an outer surface of the air supplying line and an outer surface of the fuel supplying line are in contact with each other within the interior.
